# EUROPÄISCHE PATENTANMELDUNG

(11) **EP 3 636 529 A1**
(43) Veröffentlichungstag der Anmeldung: **15.04.2020**
(21) Anmeldenummer: 19191152.8
(22) Anmeldetag: 10.08.2019
(51) Int. Cl.: B62J 45/41, G01S 17/931, B62J 3/12, B62J 6/26, B62J 27/00, G06K 9/00, B60Q 5/00

(54) **VORRICHTUNG ZUR AUTOMATISCHEN BETÄTIGUNG EINER SIGNALEINRICHTUNG FÜR EIN FAHRRAD**

(30) Priorität: 11.10.2018 DE 102018217358
(71) Anmelder: Robert Bosch GmbH, 70442 Stuttgart (DE)
(72) Erfinder: Moia, Alessandro, 71088 Holzgerlingen (DE); Riese, Christian, 70437 Stuttgart (DE)

(57) **Zusammenfassung**

Die Erfindung betrifft eine Vorrichtung zur automatischen Betätigung einer Signaleinrichtung für ein Fahrrad, mit einer Umfeldsensorik (10) und mit einer Verarbeitungseinheit (20), wobei die Umfeldsensorik (10) zur Erfassung von Objekten im Umfeld des Fahrrads eingerichtet ist, wobei die Verarbeitungseinheit (20) dazu eingerichtet ist, bei Annäherung eines Objekts ein Signal (35) zur Betätigung der Signaleinrichtung auszugeben.

## Beschreibung

### Stand der Technik

Die Erfindung betrifft eine Vorrichtung zur automatischen Betätigung einer Signaleinrichtung für ein Fahrrad.

Elektrisch betätigbare Fahrradklingeln, Hupen oder Hörner sind bekannt. Aus dem technischen Gebiet des autonomen Fahrens ist verschiedene Umfeldsensorik bekannt.

Fahrradklingeln dienen zum Warnen bei Gefahrensituationen, wie etwa einem drohenden Zusammenstoß, aber auch als Überholsignal eines sich nähernden Fahrrades an einen davor befindlichen Verkehrsteilnehmer. Weil Fahrräder oft auf gemischt benutzten Verkehrswegen benutzt werden, kann es sich dabei insbesondere um ein anderes Fahrrad oder einen Fußgänger handeln.

### Vorteile der Erfindung

Die Erfindung betrifft eine Vorrichtung zur automatischen Betätigung einer Signaleinrichtung für ein Fahrrad, mit einer Umfeldsensorik und mit einer Verarbeitungseinheit, wobei die Umfeldsensorik zur Erfassung von Objekten im Umfeld des Fahrrads eingerichtet ist, wobei die Verarbeitungseinheit dazu eingerichtet ist, bei Annäherung eines Objekts ein Signal zur Betätigung der Signaleinrichtung auszugeben.

Eine vorteilhafte Ausgestaltung der Erfindung sieht vor, dass die Umfeldsensorik eine Kamera und/oder ein Radar und/oder ein Lidar aufweist.

Eine vorteilhafte Ausgestaltung der Erfindung sieht vor, dass die Verarbeitungseinheit dazu eingerichtet ist, eine Klingel, eine Hupe ein Horn oder eine andere akustische Signaleinrichtung an dem Fahrrad zu betätigen.

Eine vorteilhafte Ausgestaltung der Erfindung sieht vor, dass die Verarbeitungseinheit dazu eingerichtet ist, eine optische Signaleinrichtung an dem Fahrrad, insbesondere einen Scheinwerfer und/oder ein Rücklicht, zu betätigen.

Eine vorteilhafte Ausgestaltung der Erfindung sieht vor, dass die Verarbeitungseinheit dazu eingerichtet ist, mittels drahtloser Kommunikation eine am Objekt mitgeführte Signaleinrichtung zu betätigen.

Eine vorteilhafte Ausgestaltung der Erfindung sieht vor, dass die Verarbeitungseinheit dazu eingerichtet ist, mittels drahtloser Kommunikation die Antriebsleistung eines angetriebenen Objekts zu beeinflussen.

Eine vorteilhafte Ausgestaltung der Erfindung sieht vor, dass die Verarbeitungseinheit dazu eingerichtet ist eine Schallrichtung einer richtbaren Schallquelle an dem Fahrrad auf das Objekt zu richten.

Eine vorteilhafte Ausgestaltung der Erfindung sieht vor, dass die Umfeldsensorik auch ein Mikrofon umfasst und Verarbeitungseinheit dazu eingerichtet ist, die akustische Signaleinrichtung an dem Fahrrad mit einem bestimmten Frequenzabstand und/oder Signal-Rausch-Abstand zu einem Umgebungsgeräusch zu betätigen.

### Vorteilhaft kann die Erfindung die Fahrsicherheit von

Fahrrädern/Pedelecs/Ebikes erhöhen. Durch den Einsatz der erfindungsgemäßen Vorrichtung kann der Fahrer beide Hände unverändert am Lenker lassen und sich trotzdem durch ein Signal, insbesondere ein akustisches Signal anderen Verkehrsteilnehmern in seinem Umfeld bemerkbar machen und darüber hinaus auch selbst akustische und andere Hinweise erhalten.

Bei einer klassischen Anordnung einer Klingel oder des Betätigungsknopfes einer Hupe muss zu deren Betätigung eine Hand zumindest teilweise gelöst oder deren Haltung verändert werden, wodurch die Fahrsicherheit beeinträchtigt wird.

Erfindungsgemäß weist die Vorrichtung eine Umfeldsensorik auf um Objekte, insbesondere andere Verkehrsteilnehmer wie Radfahrer, Fußgänger etc. zu erkennen und wertet in einer Verarbeitungseinheit diese entsprechend aus um bei Bedarf automatisch eine Signaleinrichtung, beispielsweise eine Klingel auszulösen um die anderen Verkehrsteilnehmer auf sich aufmerksam zu machen oder um zu erreichen, dass diese zur Seite gehen oder sonst wie ausweichen.

### Zeichnung

Figur 1 zeigt schematisch eine erfindungsgemäße Vorrichtung zur automatischen Betätigung einer Signaleinrichtung für ein Fahrrad.
Figur 2 zeigt ein Ausführungsbeispiel der erfindungsgemäßen Vorrichtung.
Figur 3 zeigt ein weiteres Ausführungsbeispiel der erfindungsgemäßen Vorrichtung.
Figur 4 zeigt eine richtbare Schallquelle für ein Fahrrad.

### Ausführungsbeispiel

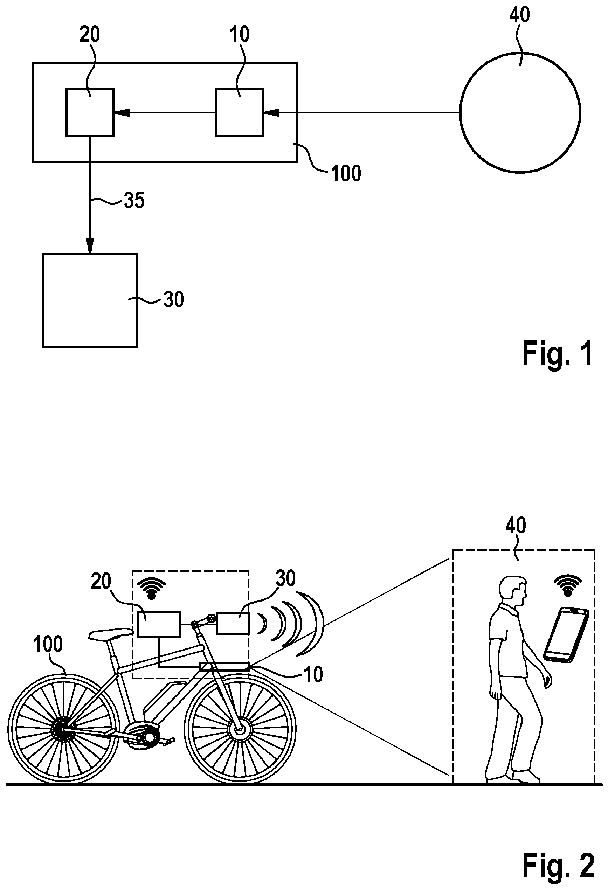

Figur 1 zeigt schematisch eine erfindungsgemäße Vorrichtung zur automatischen Betätigung einer Signaleinrichtung für ein Fahrrad. Die Vorrichtung weist eine Umfeldsensorik 10 und eine Verarbeitungseinheit 20 auf. Die Umfeldsensorik 10 ist zur Erfassung von Objekten 40 im Umfeld des Fahrrads 100 eingerichtet. Die Verarbeitungseinheit 20 ist dazu eingerichtet, bei Annäherung eines Objekts 40 ein Signal 35 zur Betätigung der Signaleinrichtung 30 auszugeben. Die Signaleinrichtung 30 kann dabei am Fahrrad 100 oder am Objekt 40 angeordnet sein oder mitgeführt werden.

Figur 2 zeigt ein Ausführungsbeispiel der erfindungsgemäßen Vorrichtung. Dargestellt ist ein Fahrrad 100, hier ein Elektrofahrrad, welches die erfindungsgemäße Vorrichtung aufweist. Die Umfeldsensorik 10 tastet einen Bereich vor dem Fahrrad 100 ab. Die Daten der Umfeldsensorik 10 werden in der Verarbeitungseinrichtung 20 verarbeitet. Vor dem Fahrrad 100 befindet sich ein Objekt 40, hier ein Fußgänger, dem sich das Fahrrad 100 nähert. Das Signal 35 wird in diesem Ausführungsbeispiel an zwei Signaleinrichtungen 30 gesendet, und zwar an eine Klingel am Fahrrad 100 und an ein Smartphone, welches der Fußgänger mit sich führt.

Im Einzelnen besteht die erfindungsgemäße Vorrichtung aus der Umfeldsensorik, z.B. Mono-Kamera, Radar oder Lidar, welche beispielsweise wie in Figur 2 zu sehen im Bereich des Lenkers oder auch Vorderradlichts verbaut ist. Im weiteren einem Bordcomputer in welchem die Verarbeitungseinrichtung mittels entsprechenden Erkennungsalgorithmen die Umfeldsensorikdaten verarbeitet und einer frei ansteuerbaren Klingel.
Wird ein Weg befahren der beispielsweise von Radfahrern und Fußgängern gleichermaßen benutzt wird, wird eine Fußgängergruppe entsprechend frühzeitig erkannt und ein Klingelsignal ausgelöst, sodass diese bei erreichen sicher überholt werden kann. Gleiches ist für andere Radfahrer denkbar, die bspw. überholt werden. In diesem Fall kann dies auch per Bike2X geschehen, so dass der langsame Radfahrer oder Fußgänger eine entsprechende Meldung auf dem Bordcomputer oder Smartphone/Smartwatch erhält.
Die Warnung anderer Verkehrsteilnehmer kann personenabhängig durchgeführt werden, basierend auf cloudbasierten Informationen: für ältere oder schwerhöriger Teilnehmer wird die Funktion lautere Töne auslösen, für jüngeren Teilnehmer wird die Intensität reduziert.
Die Umfeldsensorik ist in der Lage die Reaktion der Verkehrsteilnehmer zu überwachen und falls keine Reaktion erkennbar ist, dann wird die Intensität der Warnung allmählich erhöht bis eine Reaktion messbar ist.
Falls der zu warnende Verkehrsteilnehmer ein Fußgänger ist der Musik über Kopfhörer hört, kann die Warnung auch über diese erfolgen oder das System kann die Musik Lautstärke reduzieren damit das Signal für den Fußgänger hörbar ist.
Falls der Verkehrsteilnehmer ein Auto ist, dann kann die Funktion über Bike2Car Kommunikation ein Signal durch die Stereoanlage des Autos auslösen um den Autofahrer zu warnen.
Für Radfahrer ist ferner denkbar, dass um einen sicheren Überholvorgang zu gewährleisten der zu überholende Fahrer im Falle eines Pedelecs/Ebikes nicht beschleunigen kann bzw. dass die Unterstützungsleistung des Motors entsprechend konstant gehalten wird oder leicht gedrosselt.
Ferner ist auch denkbar in Notsituationen neben einer automatisierten Ansteuerung des akustischen Signals dies auch mit dem Licht speziell bei Dunkelheit zu kombinieren. So könnte bei starker Abbremsung auf ein Hindernis eine entsprechende Auslösung der Signale mit erhöhter Frequenz z.B. der Klingel erfolgen.
Als Lösung für die Klingel ist neben einem konventionellen Klangkörper auch die Anbringung eines Lautsprechers ohne Membran an den Fahrradrahmen denkbar, welcher als Resonanzkörper fungiert.
Diese Lösung ist besonders vorteilhaft, weil sie es erlaubt unterschiedliche Frequenzen zu erzeugen. Diese Umsetzung erlaubt die Problematik von "audio masking" wie im Weiteren beschrieben zu vermeiden. Durch ein Mikrofon ist das System in der Lage das Umgebungsrauschen zu messen und dadurch folgende Maßnahmen umzusetzen.
- Die Lautstärke der Warnung wird im Falle eines hohen Umgebungsgeräuschpegels erhöht.
- Die Frequenz der Warnung wird in Frequenzbereichen ausgelöst in denen das Umgebungsgeräusch schwächer ist
   Mit den zwei Maßnahmen kann sichergestellt werden, dass die Klingel Warnungen mit passender Lautstärke und Frequenz auslöst um die Wahrnehmbarkeit sicherzustellen.
   Generell ist für den automatisierten Ring-Assist ein Ein-/Ausschalten über ein HMI-Interface denkbar, wodurch auf einen manuellen Betrieb umgeschaltet werden kann und der Fahrer die akustische Signalvorrichtung direkt bedienen kann.

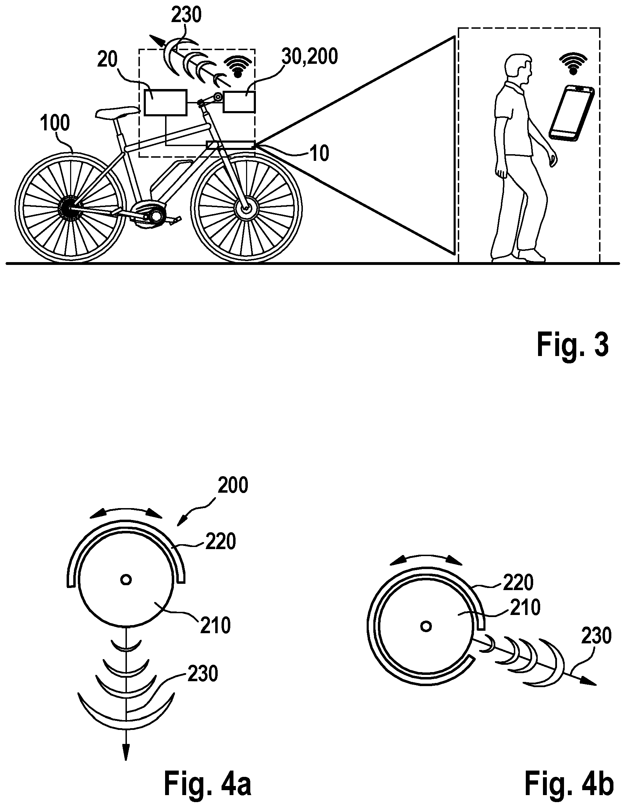

Figur 3 zeigt ein weiteres Ausführungsbeispiel der erfindungsgemäßen Vorrichtung.
Als weitere Variante ist denkbar, dass die automatisierte Klingel 30, 200 nicht nur zum warnen anderer Verkehrsteilnehmer verwendet wird, sondern auch den Fahrer selbst warnt. Hierfür ist entweder eine zweigeteilte Ausführung der Klingel denkbar oder das gezielte Leiten oder Aussenden von Schallwellen.

Die Figuren 4 a und b zeigen hierzu eine richtbare Schallquelle für ein Fahrrad. Dargestellt ist eine akustische Signaleinrichtung in Form einer Klingel 200 mit einer Glocke 210 und einer drehbaren Schallblende 220. Die Schallblende 220 umschließt bis auf eine Schallöffnung die Glocke 210. Die Schallöffnung bestimmt dabei die Schallausbreitungsrichtung 230. Figur 4 a zeigt eine Ausführungsform mit einer Schallblende 220 in Form eines Leitblechs für die Beschallung eines Halbbereichs. Figur 4b zeigt eine Ausführungsform mit einer Schallblende 220 in Form eines Leitblechs mit einer kleinen Öffnung für eine gezielte Beschallung von Einzelobjekten. Die Schallblende 220 kann mittels eines kleinen Motors so gedreht werden, dass der Schall nur in eine bestimmte Richtung, z.B. in Richtung eines bestimmten Fußgängers oder eines anderen beweglichen Objekts 30 das die Fahrtrichtung des Fahrrades kreuzt oder sich auf Kollisionskurs befindet. In dem in Figur 3 dargestellten Ausführungsbeispiel, in dem die automatisierte Klingel auch den Fahrer selbst warnen kann, wird dazu die Schallblende 220 so gedreht, dass die Schallausbreitungsrichtung 230 zum Fahrer des Fahrrads gerichtet ist. Möglich ist auch, eine erste richtbare Schallquelle zum Warnen von anderen Verkehrsteilnehmern und eine zweite Schallquelle zum Warnen des Fahrers des Fahrrades zu kombinieren.

### Bezugszeichenliste

- 10: Umfeldsensorik
- 20: Verarbeitungseinheit
- 30: Signaleinrichtung
- 35: Signal
- 40: Objekt

- 100: Fahrrad
- 200: Klingel
- 210: Glocke
- 220: drehbare Schallblende
- 230: Schallausbreitungsrichtung

## Patentansprüche

1. Vorrichtung zur automatischen Betätigung einer Signaleinrichtung für ein Fahrrad, mit einer Umfeldsensorik (10) und mit einer Verarbeitungseinheit (20), wobei die Umfeldsensorik (10) zur Erfassung von Objekten (40) im Umfeld des Fahrrads eingerichtet ist, wobei die Verarbeitungseinheit (20) dazu eingerichtet ist, bei Annäherung eines Objekts (40) ein Signal (35) zur Betätigung der Signaleinrichtung auszugeben.

2. Vorrichtung nach Anspruch 1, **dadurch gekennzeichnet, dass** die Umfeldsensorik (10) eine Kamera und/oder ein Radar und/oder ein Lidar aufweist.

3. Vorrichtung nach Anspruch 1 oder 2, **dadurch gekennzeichnet, dass** die Verarbeitungseinheit (20) dazu eingerichtet ist, eine Klingel, eine Hupe ein Horn oder eine andere akustische Signaleinrichtung an dem Fahrrad zu betätigen.

4. Vorrichtung nach Anspruch 1 oder 2, **dadurch gekennzeichnet, dass** die Verarbeitungseinheit (20) dazu eingerichtet ist, eine optische Signaleinrichtung an dem Fahrrad, insbesondere einen Scheinwerfer und/oder ein Rücklicht, zu betätigen.

5. Vorrichtung nach Anspruch 1 oder 2, **dadurch gekennzeichnet, dass** die Verarbeitungseinheit (20) dazu eingerichtet ist, mittels drahtloser Kommunikation eine am Objekt (40) mitgeführte Signaleinrichtung zu betätigen.

6. Vorrichtung nach Anspruch 1 oder 2, **dadurch gekennzeichnet, dass** die Verarbeitungseinheit (20) dazu eingerichtet ist, mittels drahtloser Kommunikation die Antriebsleistung eines angetriebenen Objekts zu beeinflussen.

7. Vorrichtung nach Anspruch 3, **dadurch gekennzeichnet, dass** die Verarbeitungseinheit (20) dazu eingerichtet ist eine Schallrichtung einer richtbaren Schallquelle an dem Fahrrad auf das Objekt zu richten.

8. Vorrichtung nach Anspruch 3, **dadurch gekennzeichnet, dass** die Umfeldsensorik (10) auch ein Mikrofon umfasst und die Verarbeitungseinheit (20) dazu eingerichtet ist, die akustische Signaleinrichtung an dem Fahrrad mit einem bestimmten Frequenzabstand und/oder Signal-Rausch-Abstand zu einem Umgebungsgeräusch zu betätigen.
